# EUROPÄISCHE PATENTANMELDUNG

(11) **EP 1 235 042 A1**
(43) Veröffentlichungstag der Anmeldung: **28.08.2002**
(21) Anmeldenummer: 01103442.8
(22) Anmeldetag: 14.02.2001
(51) Int. Cl.: F24J 2/00, F24J 2/48, E04F 13/02

(54) **Fassadenputzsystem zur besseren Nutzung der Umweltwärme in wärmespeicherfähigen Aussenbauteilen**

(71) Anmelder: Mainka, Dieter, Dipl.-Ing., 52224 Stolberg (DE); Siebel, Lothar, Dr.-Ing., 52224 Stolberg (DE)
(72) Erfinder: Mainka, Dieter, Dipl.-Ing., 52224 Stolberg (DE); Siebel, Lothar, Dr.-Ing., 40627 Aachen (DE); Schuster, Lothar, Dipl.-Ing., 40627 Düsseldorf (DE)

(57) **Zusammenfassung**

Die Erfindung betrifft die verbesserte Nutzung der Umweltwärme durch makroporöse Aussenputze (>15mm) oder andere makroporöse Außenbauteilschichten an Gebäuden, welche an der Oberfläche mit einer sonnenstrahlungsdurchlässigen Beschichtung (Haut) versehen werden; durch den luftdichten äußeren Abschluß und die Makroporen entsteht ein geschlossenes "Minihöhlensystem", welches sich in den Untergrund erstreckt und Sonnenenergiegewinne besser nutzt als bisherige dünne Putzschichten. Als Konseqenz sind Außenputze und Außenwandwerkstoffe mit größerer Rohdichte ohne Nachteile für den Wärmeschutz möglich, wodurch weniger schalltechnische und mechanische Nachteile gegeben sind. Das erfindungsgemäße Fassadenputzsystem hat den besonderen Vorteil, dass bei bestehenden Gebäuden mit einer relativ geringen Aufbauhöhe von etwa 2 bis 3cm eine wesentliche energetische Verbesserung erfolgen kann, wodurch die Bauteilrandanschlüsse leicht herstellbar sind.

## Beschreibung

Die Erfindung betrifft die verbesserte Nutzung der Umweltwärme durch makroporöse Aussenputze (> 15 mm) oder andere makroporöse Außenbauteilschichten an Gebäuden, welche an der Oberfläche mit einer sonnenstrahlungsdurchlässigen Beschichtung versehen werden; durch den luftdichten äußeren Abschluß und die Makroporen entsteht ein geschlossenes "Minihöhlensystem", welches sich in den Untergrund erstreckt und Sonnenenergiegewinne besser nutzt als bisherige dünne Putzschichten. Das erfindungsgemäße Fassadenputzsystem ist energetisch, wirtschaftlich und baukonstruktiv erheblich vorteilhafter als bisherige vergleichbare Verfahren.

Ziel der Erfindung ist, die Energieströme an Außenwänden günstig zu beeinflussen und somit die effektiven Transmissionswärmeverluste von beheizten Räumen zu mindern. Die Wärmeenergiebilanz an der äußeren Oberfläche der Außenwand soll verbessert werden, indem durch besser wirksame Energieverteilung im Untergrund die Temperatur an der äußeren Oberfläche verringert, die gespeicherte Energie aber insgesamt vergrößert wird.

### Bisherige Maßnahmen zielen auf folgende Effekte ab:

a) Minimierung der Wärmeleitung, durch trockene Bauteile und Verwendung von porösen Baustoffen mit einem großen Anteil Gasporen (Luft oder ggf.
   Teilvakuum), welche durch eine geringe Rohdichte gekennzeichnet sind.
b) Minimierung der Wärmestrahlung dadurch, daß an den Oberflächen Materialien mit einem geringen Emissionsgrad, z.B. Metallschichten, verwendet werden.
c) Minimierung der Luftkonvektion dadurch, daß Bauteilschichten (luft)dicht sind und Hohlräume nur kleine Abmessungen besitzen.
d) Zusätzliche lichtdurchlässige Bauteile, z.B. Fenster, vor opaken Bauteilen mit Energiegewinnen durch Sonnenstrahlung dadurch, daß das Material selektive Strahlungsdurchlässigkeit aufweist. Diese Massnahme ist mit einem besonders großem Aufwand verbunden.

Bei beheizten Gebäuden sind Energieeinsparmaßnahmen seit einiger Zeit von größerem Interesse und es werden auf diesem Gebiet erhebliche Anstrengungen unternommen. Da bisherige Massnahmen Nachteile bei anderen bauphysikalischen Eigenschaften von Außenbauteilen zur Folge haben (z.B. geringer Schallschutz bei geringer Masse und geringe Festigkeit) oder sehr aufwendig sind (z.B. hohe Kosten und schwierige Probleme bei den Bauteilrandanschlüssen), besteht Bedarf nach anderen Lösungen.

Das erfindungsgemäße Fassadenputzsystem ist eine Abkehr von der bisherigen Vorgehensweise und nutzt die v.g. Effekte anders, um die Wärmeströme an der Außenoberfläche von Außenbauteilen zu beeinflussen. Als Konsequenz sind Außenputze und Außenwandwerkstoffe mit größerer Rohdichte ohne Nachteile für den Wärmeschutz möglich, wodurch weniger schalltechnische und mechanische Nachteile gegeben sind. Von großer Bedeutung ist hierbei die Anwendung im Althausbereich, welche ein großes Marktpotential darstellt. Die Methode ist so konzipiert, dass eine kostengünstige Lösung ohne größere baukonstruktive Probleme herstellbar ist. Das erfindungsgemäße Fassadenputzsystem hat den besonderen Vorteil, dass bei bestehenden Gebäuden mit einer relativ geringen Aufbauhöhe von etwa 2 bis 3 cm eine wesentliche energetische Verbesserung erfolgen kann, wodurch die Bauteilrandanschlüsse leicht herstellbar sind. Das Anpassen des Fassadenputzsystems an den Fensterbereich und am Dach sowie an anderen Stellen ist somit äußerst unproblematisch. Zudem kann auch auf eine Beschichtung von schwierigen Bereichen, wie z.B.im Bereich der Laibungen sowie in der Nähe des Ortganges und anderer Stellen, wegen der geringen Flächenanteile, einfach verzichtet werden, so dass das Problem der Anpassung an eine neue Wanddicke gänzlich entfällt. Natürlich muss hierbei der Wasserablauf berücksichtigt werden und es sind ggf. Metallverwahrungen im Bereich des Daches notwendig, die baukonstruktiv mit üblichen Mitteln herstellbar sind.

Das erfindungsgemäße Fassadenputzsystem wird auf üblichen Außenwänden, welche vorzugsweise aus mineralischen Baustoffen in massiver Bauweise bestehen sollten, in üblicher Weise aufgebracht. Hierbei ist an der äußeren Oberfläche eine stark poröse Putzschicht in einem oder mehreren Arbeitsgängen aufzutragen, mit Poren, die mit den blosen Augen als solche erkennbar sind und welche gut luftdurchströmbare Verbindungen zu tieferen Porenbereichen des Putzes (Minihöhlensystem) aufweisen, so daß insbesondere bei solarer Einstrahlung im oberflächennahen Bereich der Außenwand eine interne Mikro-Luftzirkulation entsteht. Die Porosität kann z.B, durch Verwendung von einkörnigem Zuschlag (eine Sieblinienklasse) in der Putzschicht hergestellt werden. Vorteilhaft für die Energieaufnahme ist hierbei, wenn das Material nicht hellweiss ist, sondern besser eine entsprechende Tönung (z.B. rotbräunlich) und damit eine höhere Lichtabsorption besitzt. Es ist aber auch die hellweisse Variante machbar. Alternativ zu einer Putzschicht können stark poröse Steine (z.B. als kleinformatige Steine aus Bimsmaterial) den porösen Untergrund für eine sonnenstrahlungsdurchlässige Beschichtung bilden. Nach Herstellung und Abtrocknung der porösen Putzschicht ist auf deren Oberfläche eine sehr dünne, ggf. sonnenstrahlungsdurchlässige, Beschichtung (< 1 mm) in der Weise aufzubringen, dass die Gesamtoberfläche und damit auch die offenen Poren an der äußeren Oberfläche mit Materialien überzogen werden, die filmbildend sind. Hierzu ist in ähnlicher Weise wie beim Tapezieren eine Klebeschicht und ein Faservlies (z.B. Glasvliesgittergewebe) aufzukleben, womit die Porenöffnungen langfristig sicher abgedeckt werden. Die Klebeschicht sollte bevorzugt aus sonnenstrahlungsdurchlässigem Material, z.B. "Akzent" von der Firma Thermo Shield in Berlin, bestehen und das Aufbringen des Faservlieses sollte mit einer Rolle erfolgen, damit eine Strukturierung der Oberfläche aus gestalterischen Gründen erhalten bleibt. Darauf ist das Faservlies mit einem sonnenstrahlungsdurchlässigem Anstrich, z.B. "Akzent" von der Firma Thermo Shield in Berlin, zu versehen. Nach ausreichender Trocknung ist ein zweiter Anstrich aufzutragen, der wiederum aus "Akzent" bestehen oder eine Pigmentierung enthalten kann. Das als Beispiel angeführte Produkt der Firma Thermo Shield hat die günstige Eigenschaft, hinreichend elastisch und alterungsbeständig zu sein. Die Beschichtung muss neben der ggf. vorhandenen Sonnenstrahlungsdurchlässigkeit eine hinreichende Wasserdichtheit aufweisen, damit die Wand vor Schlagregenbelastungen geschützt ist.
Die energetische Wirkung ist so, dass die in die Porenräume bzw. sekundär über die abdichtende "Haut" eingestrahlte solare Energie durch die abdichtende "Haut" weniger gut hinaus kann und die gesamte Putzschicht besser erwärmt wird, indem durch Mikro-Luftzirkulation eine konvektive Wärmeübertragung in die Porenräume des Untergrundes stattfindet. Die Aufgabe der Erfindung besteht also darin, einen konstruktionsbedingten Effekt zur Verbesserung der Sonnenenergienutzung zu verwenden, welche erfindungsgemäß dadurch gelöst wird, dass das hier beschriebene Fassadenputzsystem über folgende Eigenschaften verfügt:
- Die in Aussenputzporen eingefangene solare Energie wird durch eine interne Mikro-Luftzirkulation (Konvektion) auf eine größere Speichermasse im Untergrund verteilt (Durchwärmung), so dass die Temperatur an der äusseren Oberfläche verringert und die gespeicherte Energie insgesamt vergrößert wird.
   Anm.: Hohe Temperaturen an der äußeren Oberfläche sind weniger nützlich. weil hierdurch die Wärmeabgabe nach außen durch Strahlung und Konvektion entsprechend größer würde.
- Die Wand wird vor Feuchteaufnahme infolge Schlagregen gut geschützt.
- Die poröse Putzschicht bzw. der poröse Untergrund wirkt bei hoher Wasserdampfkonzentration in den Porenräumen als Dampfdruckausgleichschicht, damit eine Blasenbildung nicht erfolgen kann.
- Die äußere filmartige Beschichtung (Haut) ist bei hoher Wasserdampfkonzentration in den Porenräumen relativ dampfdurchlässig (Sd < 15 m). damit eine Austrocknung des Untergrundes erfolgen kann.

Das erfindungsgemäße Fassadenputzsystem kann mittels üblicher Putzmethoden auf die Unterkonstruktion aufgetragen werden. Durch die vorhandenen Vertriebsstrukturen, das heißt Putzhersteller, Handel und Stukkateurbetriebe, ist die gewerbliche Nutzung möglich.

## Patentansprüche

1. Fassadenputzsystem zur besseren Nutzung der Umweltwärme in wärmespeicherfähigen Außenbauteilen, **dadurch gekennzeichnet, daß** solare Energie in nach aussen geschlossenen und durchströmbaren Porenräumen durch eine interne Mikro-Luftzirkulation (Konvektion) auf eine größere Speichermasse im Untergrund verteilt wird, womit die Temperatur an der äußeren Oberfläche verringert und die gespeicherte Energie insgesamt vergrößert wird und daß eine wesentliche energetische Verbesserung bei neuen und besonders bei bestehenden Gebäuden einfach erfolgen kann, indem mit einer relativ geringen Schichtdicke von etwa 2 bis 3 cm die Bauteilrandanschlüsse leicht herstellbar sind.

2. Fassadenputzsystem zur besseren Nutzung der Umweltwärme in wärmespeicherfähigen Außenbauteilen nach Anspruch 1, **dadurch gekennzeichnet, daß** Außenwandwerkstoffe mit größerer Rohdichte ohne Nachteile für den Wärmeschutz möglich sind, wodurch weniger schalltechnische und mechanische Nachteile gegeben sind.

3. Fassadenputzsystem zur besseren Nutzung der Umweltwärme in wärmespeicherfähigen Außenbauteilen nach Anspruch 1. **dadurch gekennzeichnet, daß** alternativ zu einer Putzschicht auch stark poröse Steine (z.B. als kleinformatige Steine aus Bimsmaterial) oder herkömmliche stark poröse Aussenputze den porösen Untergrund für eine sonnenstrahlungsdurchlässige Beschichtung bilden können.

4. Fassadenputzsystem zur besseren Nutzung der Umweltwärme in wärmespeicherfähigen Außenbauteilen nach Anspruch 1, **dadurch gekennzeichnet, daß** die Wand vor Feuchteaufnahme infolge Schlagregen gut geschützt wird.

5. Fassadenputzsystem zur besseren Nutzung der Umweltwärme in wärmespeicherfähigen Außenbauteilen nach Anspruch 1, **dadurch gekennzeichnet, daß** die poröse Putzschicht bzw. der poröse Untergrund bei hoher Wasserdampfkonzentration in den Porenräumen als Dampfdruckausgleichschicht wirkt, damit eine Blasenbildung nicht erfolgt.

6. Fassadenputzsystem zur besseren Nutzung der Umweltwärme in wärmespeicherfähigen Außenbauteilen nach Anspruch 1, **dadurch gekennzeichnet, daß** die äussere Beschichtung (Behäutung) bei hoher Wasserdampfkonzentration in den Porenräumen relativ dampfdurchlässig (Sd < 10 m) ist. damit eine Austrocknung des Untergrundes erfolgen kann.
